# EUROPEAN PATENT APPLICATION

(11) **EP 4 738 837 A1**
(43) Date of publication of application: **06.05.2026**
(21) Application number: 24210240.8
(22) Date of filing: 31.10.2024
(51) Int. Cl.: H04N 21/234, H04N 21/2343, H04N 21/258, H04N 21/8358, H04N 21/845, G06T 1/00

(54) **METHOD FOR WATERMARKING A MEDIA CONTENT, CORRESPONDING COMPUTER PROGRAM PRODUCTS AND DEVICES**

(71) Applicant: Nagravision Sarl, 1033 Cheseaux-sur-Lausanne (CH)
(72) Inventor: CELIK, Mehmet, 1033 CHESEAUX-SUR-LAUSANNE (CH)
(74) Representative: Santarelli

(57) **Abstract**

A method is proposed for generating an additional watermarked variant of a segment of a media content from at least two initial watermarked variants of the segment. Each initial watermarked variant comprises a sequence of sub-segments carrying a watermark pattern associated with the initial watermarked variant. Such method comprises:
- obtaining the at least two initial watermarked variants; and
- generating the additional watermarked variant, the generating comprising, for at least one sub-segment of given rank in the sequence of an initial watermarked variant: replacing the sub-segment of given rank in the sequence by a replacing sub-segment having the same given rank in a sequence of another initial watermarked variant.

## Description

### FIELD OF THE DISCLOSURE

The field of the disclosure is that of the delivery of media contents to end-users.

More specifically, the disclosure relates to a technic for preventing piracy of delivered media contents.

The disclosure can be of interest in any field wherein such media contents have to be delivered to end-users. This is the case for instance in the field of digital video or audio streaming.

### TECHNOLOGICAL BACKGROUND

To fight content piracy, content owners increasingly request that invisible watermarks are inserted into their digital assets, e.g. video or audio assets, when these assets are delivered to the end-users. The watermark is used e.g. for traitor-tracing: an identifier encoded within the watermark allows to uniquely identify the media player that received the content from a streaming platform, or to uniquely identify the respective user account used to access the content, which is leaked or shared publicly.

For instance, considering the digital video streaming context, from an implementation point of view, video encoders generate independently decodable chunks (e.g. Group of Pictures (GOPs) or Instantaneous Decoder Refresh (IDR) intervals) that are put into container packets called segments. Such segments are listed in manifests (e.g. a Hypertext Transfer Protocol (HTTP) Live Streaming (HLS) manifest or a Dynamic Adaptive Streaming over HTTP (DASH) manifest) and requested by the player using HTTP requests.

A common approach in the field of streaming relies on A/B watermarking. It consists in encoding two versions of the same content, one with a watermark pattern (or mark) A and one with a watermark pattern B and to provide unique sequences of video segments to respective media players - each video segment either encoding an A or a B watermark pattern. The identifier of a given media player or of a respective user account corresponds to a combined sequence of A/B watermark patterns. In other words, if watermark pattern A encodes e.g. a low state bit "0" and watermark pattern B encodes a high state bit "1", the sequence of A/B watermark patterns corresponds to the binary representation of an identifier associated with the considered player. If the digital asset is pirated, the sequence of A/B watermark patterns is extracted to identify the pirate user and/or the corresponding media player. The media player or the user account may be blocked for further streaming as a result. This relies on a unique watermark token (comprising e.g. a watermark identifier or directly a watermark pattern) when accessing the content, e.g. during a streaming session. Such watermark token needs to be provided to the media player which, in turn, needs to append it to the segment request when accessing the content.

In common implementations, the segment duration is set to 2-seconds. However, some deployments prefer to use longer segment durations, e.g. a segment duration of 4-seconds or 6-seconds. For instance, the http live streaming protocol recommends a segment duration of 6-seconds. But, having that each segment either encodes an A or a B watermark pattern, increasing the segment duration increases the content duration for the same A/B sequence, i.e. for conveying the same identifier of a media player or of a respective user account. This has several drawbacks such as: longer content is needed for detection, delays blocking action for live streaming, limitations in collusion robustness which depends on the sequence (code) length.

One known solution is to use more variants, e.g. A or B or C or D..., to be carried by the segments, a variant thus encoding more than one bit of the identifier of the media player or of the user account. However, this is done at the expense of an extra computation on the encoder side to prepare more variants (especially if the variants are differentiated before encoding and packaging). Such encoding requires a high computation load, in particular for video contents.

There is thus a need for a solution that allows reducing the latency in the detection of the sequence of watermark patterns e.g. in the context of media streaming e.g. when the sequence of watermark patterns represents an identifier associated to a media player or an identifier of a user account accessed from the media player. Preferably, such solution should minimize the computation load at the encoder stage.

### SUMMARY

A particular aspect of the present disclosure relates to a method for generating at least one additional watermarked variant of a segment of a media content from at least two initial watermarked variants of the segment, each initial watermarked variant comprising a sequence of sub-segments carrying a watermark pattern associated with the initial watermarked variant. Such method comprises:
- obtaining the at least two initial watermarked variants; and
- generating at least one additional watermarked variant, the generating comprising, for at least one sub-segment of given rank in the sequence of an initial watermarked variant: replacing the sub-segment of given rank in the sequence by a replacing sub-segment having the same given rank in a sequence of another initial watermarked variant, the replacing delivering the additional watermarked variant comprising a sequence of sub-segments carrying different watermark patterns associated with at least two initial watermarked variants.

The present disclosure thus proposes a new and inventive solution for reducing the latency in the detection of the sequence of watermark patterns e.g. when the sequence of watermark patterns represents an identifier associated to a media player (e.g. an identifier of the media player or an identifier of a user account accessed from the media player) as can be the case in the context of video or audio streaming.

More particularly, the generation of the additional watermarked variants allows having a time domain granularity for the watermark patterns at the sub-segment (also named "part") level rather than at the segment level. For a given sequence of watermark patterns, this reduces the overall time duration of the sequence, and thus the latency in the detection of the sequence.

Furthermore, having the generation of the additional watermarked variants based on a mix of the initial watermarked variants allows avoiding the encoding of new variants. For instance, in the case of video encoding, the present solution thus minimizes the computation load at the video encoder stage.

In some embodiments, the replacing is executed for a plurality of sub-segments of respective given rank in the sequence of the initial watermarked variant. Each of the sub-segments of respective given rank is replaced by a replacing sub-segment having the respective given rank in a sequence of another initial watermarked variant among the at least two initial watermarked variants.

Thus, more than two watermark patterns per segment is achieved. This further reduces the overall time duration of the sequence, and thus the latency in the detection of the sequence.

In some embodiments, the at least two initial watermarked variants comprise at least three initial watermarked variants.

Thus, each watermark pattern carried by a sub-segment represents more logical states. This further reduces the length of the sequence in term of total number of patterns to be used to represent a given binary word (the represents in turn e.g. an identifier associated to a media player), and thus the latency in the detection of the sequence.

In some embodiments, the generating further comprises: updating at least one header field of the segment, the updated header field reflecting technical features of the replacing sub-segment.

Indeed, the replacing sub-segment (and the samples contained therein) may have different technical characteristics (e.g. compressed size) than that of the replaced sub-segment. When segments are stored in a container format that includes a header with these technical characteristics, the updated header thus reflects the replacing sub-segment characteristics.

In some embodiments, the generating further comprises: parsing the initial watermarked variant to identify sub-segment boundaries.

Such sub-segment boundaries are e.g. GOP boundaries or IDR boundaries.

In some embodiments, the generating further comprises:
- determining a maximum size of the sub-segments of given rank in the sequences of the at least two initial watermarked variants; and, before executing the replacing:
- padding with dummy data the replacing sub-segment if a size of the replacing sub-segment is lower than the maximum size.

In some embodiments, the generating further comprises:
- determining, for another rank than the given rank, another maximum size of the sub-segments having the other rank in the sequences of the at least two initial watermarked variants; and
- padding with dummy data a sub-segment having the other rank in the sequence of the sub-segment to be replaced if a size of said sub-segment having the other rank in the sequence is lower than the other maximum size.

Thus, the segments according to the different variants have a same length in term of size (e.g. in term of number of bytes). For instance, ABR streaming ensures that the variants have the same duration, but not the same size. Size differences are likely due to encoding differences. And even when variants have the same segment size, they may have different sub-segments sizes. The present solution addresses this issue providing watermarked variants with a same size if needed.

In some embodiments, the generating further comprises:
- determining, for each possible given rank, a maximum size of the sub-segments of the possible given rank in the sequences of the initial watermarked variants, delivering a set of maximum sizes;
- determining a maximum segment size as a sum of the maximum sizes of the set; and, after executing the replacing:
- padding with dummy data the delivered additional watermarked variant for having a size of the delivered additional watermarked variant to be equal to the maximum segment size.

Thus, the segments according to the different variants have a same length in term of size (e.g. in term of number of bytes).

In some embodiments, the generating further comprises: comparing the watermark pattern of the sub-segment of given rank to be replaced and a predetermined watermark pattern. The replacing is executed only if the watermark pattern of the sub-segment of given rank to be replaced is not equal to the predetermined watermark pattern.

In some embodiments, the comparing is executed only if the given rank corresponds to a predetermined rank.

Thus, the number of additional watermarked variants is reduced by fixing the watermarked pattern in some sub-segments. For instance, this allows reducing the cache memory requirements at the CDN storing the watermarked variants.

Another aspect of the present disclosure relates to a method for watermarking a media content, the method comprising, for at least one segment of the media content:
- receiving a request, initiated by a media player, for the segment;
- selecting, based on an identifier associated to the media player, a watermarked variant of the segment among a set of watermarked variants of the segment; and
- sending the watermarked variant of the segment to the media player.

According to such method for watermarking, the set comprises:
- at least one initial watermarked variant of the segment, the initial watermarked variant comprising a sequence of sub-segments carrying a watermark pattern associated to the initial watermarked variant; and
- at least one additional watermarked variant comprising a sequence of sub-segments carrying different watermark patterns associated with at least two initial watermarked variants.

When the identifier is expressed as a sequence of data symbols, the watermark patterns carried by the sub-segments of the selected watermarked variant form a sequence of watermark patterns representative of successive data symbols of the sequence.

Thus, having the time domain granularity for the watermark patterns at the sub-segment level rather than at the segment level allows reducing the latency in the detection of the sequence of watermark patterns representative of the identifier.

For instance, a data symbol is a bit having two logical states, or a symbol having at least three logical states like e.g. a power of two logical states.

In some embodiments, the selecting comprises:
- obtaining a time position of the segment in the media content; and
- determining the successive data symbols of the sequence to be used for watermarking the media content at that time position.

For instance, the time position of the segment is obtained by mapping the URL (filename). Alternatively, the time position of the segment may be obtained from side information provided by the server at the origin of the segments.

In some embodiments, a format of the segment belongs to the group comprising:
- ISO base media file format;
- MPEG2 transport stream; and
- Audio data transport stream.

Another aspect of the present disclosure relates to a computer program product comprising program code instructions for implementing the above-mentioned method for generating at least one additional watermarked variant of a segment of a media content from at least two initial watermarked variants of the segment (in any of the different embodiments discussed above), when the program is executed on a computer or a processor.

Another aspect of the present disclosure relates to a computer program product comprising program code instructions for implementing the above-mentioned method for watermarking a media content (in any of the different embodiments discussed above), when the program is executed on a computer or a processor.

Another aspect of the present disclosure relates to an electronic device comprising at least one processor or at least one field-programmable gate array or at least one dedicated computing machine configured for executing all or part of the steps of the above-mentioned method for generating at least one additional watermarked variant of a segment of a media content from at least two initial watermarked variants of the segment (in any of the different embodiments discussed above). Thus, the features and advantages of this device are the same as those of the corresponding steps of said method. Therefore, they are not detailed any further.

Another aspect of the present disclosure relates to an electronic device comprising at least one processor or at least one field-programmable gate array or at least one dedicated computing machine configured for executing all or part of the steps of the above-mentioned method for watermarking a media content (in any of the different embodiments discussed above). Thus, the features and advantages of this device are the same as those of the corresponding steps of said method. Therefore, they are not detailed any further.

### BRIEF DESCRIPTION OF THE FIGURES

Other features and advantages of embodiments shall appear from the following description, given by way of indicative and non-exhaustive examples and from the appended drawings, of which:
- Figure 1a illustrates a first server generating additional watermarked variants of a segment of a media content from two initial watermarked variants of the segment, the first server being communicatively connected to a second server which is in turn communicatively connected to different media players according to one embodiment of the present disclosure;
- Figure 1b illustrates the first server generating additional watermarked variants of a segment of a media content from two initial watermarked variants of the segment, the first server being communicatively connected to the second server which is in turn communicatively connected to the different media players according to another embodiment of the present disclosure;
- Figure 2 illustrates an example of the structural blocks of a first electronic device allowing steps of the method of Figure 4, Figure 4a and Figure 4b to be executed by the first server of Figure 1a and Figure 1b according to one embodiment of the present disclosure;
- Figure 3 illustrates an example of the structural blocks of a second electronic device allowing steps of the method of Figure 5 to be executed by the second server of Figure 1a and Figure 1b according to one embodiment of the present disclosure;
- Figure 4 illustrates a flowchart of a method for generating at least one additional watermarked variant of a segment of a media content according to one embodiment of the present disclosure;
- Figure 4a illustrates a flowchart of the generating step of the method of Figure 4 according to one embodiment of the present disclosure;
- Figure 4b illustrates a flowchart of the generating step of the method of Figure 4 according to another embodiment of the present disclosure; and
- Figure 5 illustrates a flowchart of a method for watermarking a media content according to one embodiment of the present disclosure.

### DETAILED DESCRIPTION

In all of the figures of the present document, the same numerical reference signs designate similar elements and steps.

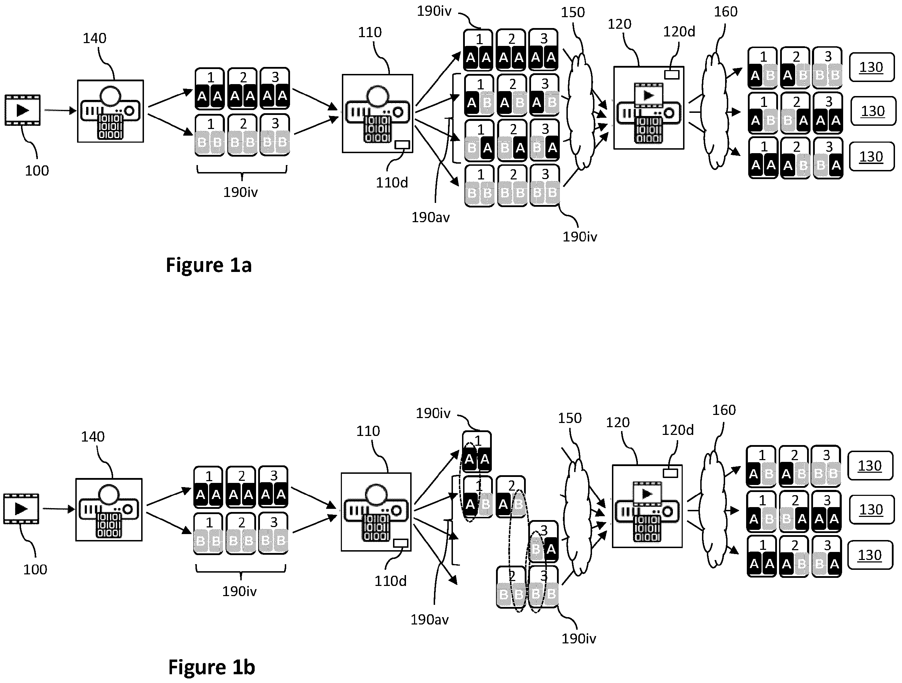

Referring now to **Figure 1a****,** we describe a first server 110 generating additional watermarked variants 190av of a segment of a media content from two initial watermarked variants 190iv of the segment, the first server 110 being communicatively connected to a second server 120 which is in turn communicatively connected to different media players 130 according to one embodiment of the present disclosure

For instance, the first server 110 is communicatively connected to the second server 120 through a first communications network 150 implementing wired broadband communications links. Such wired communications link is e.g. a xDSL communications link and implements e.g. an internet protocol. However, in some embodiments, the first communications network 150 is a wireless communications network, e.g. based on a cellular protocol (e.g. a 3GPP 2G, 3G, 4G or 5G protocol) or on a WiMAX protocol.

Back to Figure 1a, the second server 120 is communicatively connected to different media players 130 (e.g. a terminal equipment such as a TV, a smartphone, a computer...) through a second communications network 160 implementing wireless communications links. The second communications network 160 is e.g. of the WLAN type (e.g. a WiFi network) or based on a cellular protocol (e.g. a 3GPP 2G, 3G, 4G or 5G protocol) or on a WiMAX protocol. In other embodiments, the second communications network 160 implements wired broadband communications links, e.g. xDSL communications links. In some embodiments, the first communications network 150 and the second communications network 160 are a same network.

Back to Figure 1a, the first server 110 obtains two initial watermarked variants 190iv of segments of a media content 100, e.g. a video content or an audio content. More particularly, in the present embodiment, the first server 110 e.g. receives from a party server 140 the two initial watermarked variants 190iv. However, in some embodiments, the first server 110 may generate itself the two initial watermarked variants 190iv from the segments of the media content 100.

Back to Figure 1a, in the context of A/B watermarking, the first server 110 receives from the third-party server 140 initial A and B watermarked variants 190iv of segments of a media content 100. The A and B variants of the content 100 are e.g. in a Dynamic Adaptive Streaming over HTTP, DASH, format or in a HTTP Live Streaming, HLS, format. For instance, DASH specifies fragmented MP4 (fMP4) which is an ISO base media format option for both audio and video. In the same way, HLS specifies whether Transport Stream (TS), e.g. MPEG2 TS, for the video and Audio Data Transport Stream (ADTS) for audio or fMP4 for both audio and video.

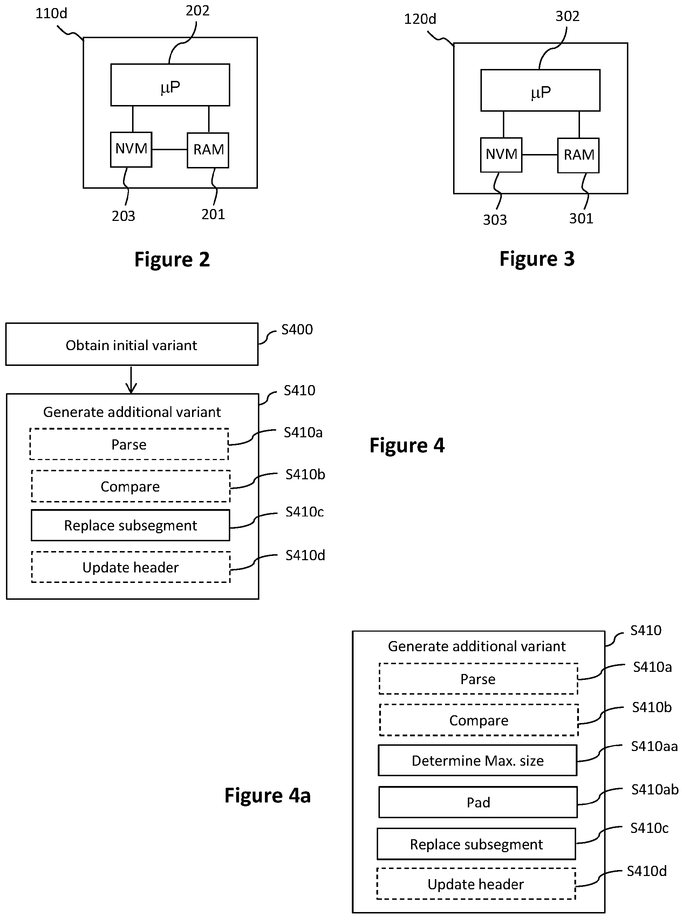

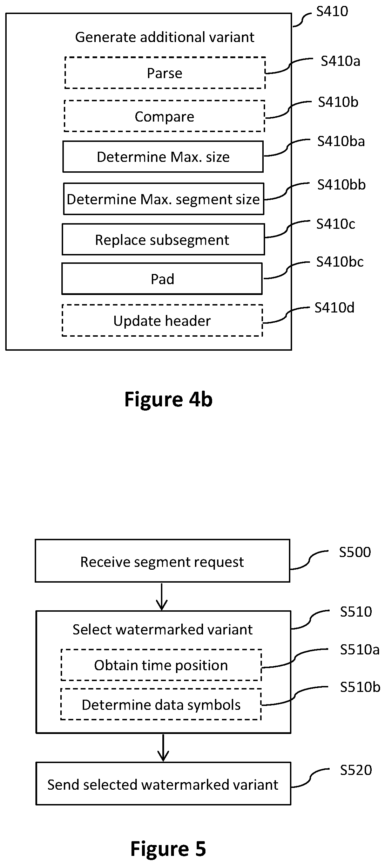

Each variant comprises a sequence of sub-segments carrying a watermark pattern, A or B, associated to the initial watermarked variant 190iv. Based on those variants, the first server 110 generates at least one additional watermarked variant 190av by executing the method of Figure 4, Figure 4a and Figure 4b. More particularly, such additional watermarked variant 190av comprises a sequence of sub-segments carrying different watermark patterns, e.g. A and B, associated with at least two initial watermarked variants 190iv.

However, in other embodiments, the first server 110 receives more than two initial watermarked variants 190iv of the segment, each initial watermarked variant comprising a sequence of sub-segments carrying a watermark pattern, e.g. A or B or C or D..., associated to the initial watermarked variant 190iv. In such cases, each additional watermarked variant 190av comprises a sequence of sub-segments carrying different watermark patterns such as e.g. A and B, A and C, A and B and C, B and C, ... Any combination of the different watermark patterns can be considered.

The sub-segments may be delimited e.g. by GOP boundaries or by IDR boundaries. Conversely, a segment is listed in manifests (e.g. an HLS manifest or a DASH manifest) and can be requested by a media player 130 using e.g. HTTP requests

Back to Figure 1a, the second server 120 is e.g. a content delivery network, CDN, server that executes the method for watermarking a media content 100 as discussed below in relation with Figure 5.

More particularly, based on an identifier associated to a media player 130 requesting a segment of the media content 100, the second server 120 selects a watermarked variant 190iv, 190av of the segment among a set of watermarked variants 190iv, 190av of the segment. Such set of watermarked variants 190iv, 190av of the segment comprises e.g. the initial watermarked variants 190iv of the segment and the additional watermarked variants 190av of the segment. When the identifier is expressed as a sequence of data symbols, the watermark patterns carried by the sub-segments of the selected watermarked variant 190iv, 190av form a sequence of watermark patterns representative of successive data symbols of the sequence (For instance, a data symbol is a bit having two logical states, or a symbol having at least three logical states like e.g. a power of two logical states). The selected watermarked variant 190iv, 190av of the segment is then sent to the media player 130 requesting the segment.

Having the time domain granularity for the watermark patterns at the sub-segment level rather than at the segment level allows reducing the latency in the detection of the sequence of watermark patterns representative of the identifier.

In the embodiment of **Figure 1b****,** the watermarked variants 190iv, 190av are variants wherein the watermark pattern of sub-segment(s) of given rank(s) is(are) predetermined watermark pattern(s). For instance, according to the example of Figure 1b, the watermarked variants 190iv, 190av are such that:
- the first sub-segment of the first segment carries an A watermark pattern;
- the second sub-segment of the second segment carries a B watermark pattern; and
- the first sub-segment of the third segment carries a B watermark pattern.

For instance, such predetermination of the watermark patterns for predetermined sub-segment time positions is used for interleaving a known synchronization sequence, which is common for all users, into the A/B sequence for each user. For instance, every 4th sub-segment may be taken from the known synchronization sequence. The synchronization sequence is used to align extracted sequence to the original sequence. This comes at the expense of longer sequence length (content duration) for user identification, as synchronization sequence cannot be used to differentiate between users.

The frequency of the predetermined watermark patterns used for the synchronization sequence may be adapted to the segment size to limit the number of variants that require caching by the second server 120. For instance, in case of 4-second segments of 2-second sub-segments, one of the two watermark patterns within a segment may be fixed, which reduces the number of variants for caching to two. For instance, if the watermark pattern of the second sub-segment is fixed at B, the second server 120 will only need to cache the AB and BB variants for that segment.

Thus, the number of additional watermarked variants is reduced by fixing the watermarked pattern in some sub-segments.

As a consequence, in some embodiments, the set of watermarked variants 190iv, 190av of the segment considered for the selection of the watermarked variant 190iv, 190av of the segment to be sent to the media player 130 comprises only part of the initial watermarked variants 190iv of the segment and of the possible additional watermarked variants 190av of the segment. It may be that none of the initial watermarked variants 190iv of the segment are considered.

In order to be able to implement all or part of the steps of the method for generating at least one additional watermarked variant of a segment of a media content 100 in the various embodiments disclosed below in relationship with Figure 4, Figure 4a and Figure 4b, the first server 110 comprises a first electronic device 110d. In some embodiments the first electronic device 110d comprises (**Figure 2**):
- a non-volatile memory (NVM) 203 (e.g. a read-only memory (ROM), a hard disk, a flash memory, etc.);
- a volatile memory 201 (e.g. a random-access memory or RAM) and a processor 302.

The non-volatile memory 203 is a non-transitory computer-readable carrier medium. It stores executable program code instructions, which are executed by the processor 202 in order to enable implementation of some steps of the method described below (method for generating at least one additional watermarked variant of a segment of a media content 100) in the various embodiments disclosed in relationship with Figure 4, Figure 4a and Figure 4b.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for generating at least one additional watermarked variant of a segment of a media content 100 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In order to be able to implement all or part of the steps of the method for watermarking a media content 100 in the various embodiments disclosed below in relationship with Figure 5, the second server 120 comprises a second electronic device 120d. In some embodiments the second electronic device 120d comprises (**Figure 3**):
- a non-volatile memory (NVM) 303 (e.g. a read-only memory (ROM), a hard disk, a flash memory, etc.);
- a volatile memory 301 (e.g. a random-access memory or RAM) and a processor 302.

The non-volatile memory 303 is a non-transitory computer-readable carrier medium. It stores executable program code instructions, which are executed by the processor 302 in order to enable implementation of some steps of the method described below (method for watermarking a media content 100) in the various embodiments disclosed in relationship with Figure 5.

Upon initialization, the aforementioned program code instructions are transferred from the non-volatile memory 303 to the volatile memory 301 so as to be executed by the processor 302. The volatile memory 301 likewise includes registers for storing the variables and parameters required for this execution.

The steps of the method for watermarking a media content 100 may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

In some embodiments, the first server 110 and the second server 120 are a same server. In some embodiments, the first electronic device 110d and the second electronic device 120d are a same electronic device.

Referring now to **Figure 4**, we describe a method for generating at least one additional watermarked variant of a segment of a media content 100 according to one embodiment of the present disclosure.

More particularly, in a **step S400**, the first electronic device 110d obtains at least two initial watermarked variants 190iv of the segment, each initial watermarked variant comprising a sequence of sub-segments carrying a watermark pattern associated with the initial watermarked variant 190iv. As discussed above in relation with Figure 1, in some embodiments, the first electronic device 110d receives the at least two initial watermarked variants 190iv from the third-party server 140. In other embodiments, the first electronic device 110d generates itself the at least two initial watermarked variants 190iv, e.g. through encoding of the media content 100.

Back to Figure 4, in a **step S410**, the first electronic device 110d generates at least one additional watermarked variant 190av of the segment.

More particularly, for at least one sub-segment of given rank in the sequence of sub-segments carrying a watermark pattern of an initial watermarked variant 190iv among the at least two initial watermarked variants 190iv, the first electronic device 110d executes a **step S410a** wherein the initial watermarked variant is parsed to identify sub-segment boundaries. Depending on the format of the segment, such sub-segment boundaries are e.g. GOP boundaries or IDR boundaries. Thus, the boundaries of the sub-segments that compose the segment are identified for the considered initial watermarked variant 190iv. However, in some embodiments, the step S410a is not executed, e.g. when the sub-segments boundaries are already identified e.g. in one (or more) header field of the segment.

Back to Figure 4, the first electronic device 110d executes a **step S410b** wherein the watermark pattern of the sub-segment of given rank in the sequence of the initial watermarked variant 190iv is compared to a predetermined watermark pattern.

Only if the watermark pattern of the sub-segment of given rank in the sequence of the initial watermarked variant 190iv is not equal to the predetermined watermark pattern, in a **step S410c** the first electronic device 110d replaces the sub-segment of given rank in the sequence by a replacing sub-segment having the given rank in a sequence of another initial watermarked variant among the at least two initial watermarked variants 190iv. The execution of the step S410c delivers an additional watermarked variant 190av comprising a sequence of sub-segments carrying different watermark patterns associated with at least two initial watermarked variants 190iv.

Having the generation of the additional watermarked variants 190av based on a mix of the initial watermarked variants 190iv allows avoiding the encoding of new variants. The present solution thus minimizes the computation load at the encoder stage.

Furthermore, the execution of the step S410b allows reducing the number of additional watermarked variants 190av by fixing the watermarked pattern in some sub-segments. For instance, this allows reducing the cache memory requirements at the CDN storing the watermarked variants 190iv, 190av.

In some embodiments, the step S410b is executed only if the given rank corresponds to a predetermined rank.

As discussed above in relation with Figure 1b, such predetermination of the watermark patterns for predetermined sub-segment time positions is used e.g. for interleaving a known synchronization sequence, which is common for all users, into the particular sequence for each user.

However, in some embodiments, the step S410b is not executed. In such embodiments, the step S410c is systematically executed.

In some embodiments, the step S410c is executed for a plurality of sub-segments of respective rank in the sequence of the initial watermarked variant 190iv. Each of the sub-segments of respective rank is replaced by a replacing sub-segment having the respective rank in a respective sequence of another initial watermarked variant 190iv among the at least two initial watermarked variants 190iv.

Thus, more than two watermark patterns per segment is achieved in the additional watermarked variant 190av. This further reduces the overall time duration of the sequence, and thus the latency in the detection of the sequence.

In some embodiments, the at least two initial watermarked variants 190iv comprise more than two initial watermarked variants 190iv of the segment, e.g. at least three initial watermarked variants 190iv, each initial watermarked variant 190iv comprising a sequence of sub-segments carrying a watermark pattern (e.g. A or B or C or D...), associated to the initial watermarked variant 190iv. In such cases, each additional watermarked variant 190av comprises a sequence of sub-segments carrying different watermark patterns (such as e.g. A and B, A and C, A and B and C, B and C, ... Any combination of the different watermark patterns can be considered).

Thus, each watermark pattern carried by a sub-segment represents more logical states. This further reduces the length of the sequence in term of total number of patterns to be used to represent a given binary word (which represents in turn e.g. an identifier associated to a media player), and thus the latency in the detection of the sequence.

Back to Figure 4, in a **step S410d,** the first electronic device 110d updates one (or more) header field of the segment. The updated header field reflects the technical features of the replacing sub-segment.

Indeed, the replacing sub-segment (and the samples contained therein) may have different technical characteristics (e.g. compressed size) than that of the replaced sub-segment. When segments are stored in a container format that includes a header with these technical characteristics, the header is updated to reflect the replacing sub-segment characteristics. For instance, compressed sample sizes (in bytes) are contained in the ISO base media file format (also known as MP4), the header is updated to reflect the correct sizes for the output. As another example, segments are stored in numbered fixed size packets for MPEG2 transport streams. In this case, the packet headers may be updated to reflect the new numbering (e.g. "continuity counters" in TS packet headers) or to reflect the discontinuity in the numbering (e.g. "discontinuity indicator" in the TS packet adaptation field).

However, in some embodiments, the step S410d is not executed, e.g. when no header field is used for reflecting the technical features of the sub-segments.

Referring now to **Figure 4a**, we describe the step S410 according to another embodiment of the present disclosure.

More particularly, the first electronic device 110d executes the step S410a discussed above. However, as was the case for the embodiments discussed above in relation with Figure 4, the step S410a is optional. Consequently, in some embodiments, the step S410a is not executed, e.g. when the sub-segments boundaries are already identified e.g. in one (or more) header field of the segment.

Back to Figure 4a, the first electronic device 110d executes the step S410b discussed above.

Only if the watermark pattern of the sub-segment of given rank in the sequence of the initial watermarked variant 190iv is not equal to the predetermined watermark pattern, the first electronic device 110d executes the subsequent steps S410aa, S410ab and S410c.

However, as was the case for the embodiments discussed above in relation with Figure 4, the step S410b is optional. Consequently, in some embodiments, the step S410b is not executed and the steps S410aa and S410ab discussed below, as well as the step S410c, are systematically executed.

Back to Figure 4a, in a **step S410aa** the first electronic device 110d determines a maximum size of the sub-segments of given rank in the respective sequences of the different initial watermarked variants 190iv.

In a **step S410ab**, the first electronic device 110d pads with dummy data the replacing sub-segment if a size of said replacing sub-segment is lower than the maximum size.

In some embodiments, during the step **S410aa** the first electronic device 110d determines for another rank than the given rank, another maximum size of the sub-segments having the other rank in the sequences of the at least two initial watermarked variants 190iv. This is done as an alternative or as a complement of the above-mentioned determination of the maximum size of the sub-segments of given rank in the respective sequences of the initial watermarked variants 190iv.

Thus, in the **step S410ab**, the first electronic device 110d pads with dummy data a sub-segment having the other rank in the sequence of the sub-segment to be replaced if a size of said sub-segment having the other rank in the sequence is lower than the other maximum size. This is done as an alternative or as a complement of the above-mentioned padding with dummy data the replacing sub-segment if a size of said replacing sub-segment is lower than the maximum size.

Thus, the execution of the step S410aa and of the step S410ab results in having the segments according to the different variants with the same size (e.g. in term of number of bytes). For instance, ABR streaming ensures that the variants have the same duration, but not the same size. Size differences are likely due to encoding differences. And even when variants have the same segment size, they may have different sub-segments sizes. The present solution addresses this issue providing watermarked variants with the same size if needed.

Back to Figure 4a, the step S410c discussed above is then executed based on a replacing sub-segment having the maximum size. In some embodiments, other sub-segments have a size increased up to the respective other maximum size.

Back to Figure 4a, the first electronic device 110d executes the step S410d discussed above. However, as was the case for the embodiments discussed above in relation with Figure 4, the step S410d is optional. Consequently, in some embodiments, the step S410d is not executed, e.g. when no header field is used for reflecting the technical features of the sub-segments.

Referring now to **Figure 4b**, we describe the step S410 according to yet another embodiment of the present disclosure.

More particularly, the first electronic device 110d executes the step S410a discussed above. However, as was the case for the embodiments discussed above in relation with Figure 4 and Figure 4a, the step S410a is optional. Consequently, in some embodiments, the step S410a is not executed, e.g. when the sub-segments boundaries are already identified e.g. in one (or more) header field of the segment.

Back to Figure 4b, the first electronic device 110d executes the step S410b discussed above.

Only if the watermark pattern of the sub-segment of given rank in the sequence of the initial watermarked variant 190iv is not equal to the predetermined watermark pattern, the first electronic device 110d executes the subsequent steps S410ba, S410bb, S410c and S410bc.

However, as was the case for the embodiments discussed above in relation with

Figure 4 and Figure 4a, the step S410b is optional. Consequently, in some embodiments, the step S410b is not executed and the steps S410ba, S410bb, S410c discussed below, as well as the step S410bc are systematically executed.

Back to Figure 4b, in a **step S410ba** the first electronic device 110d determines for each possible given rank, a maximum size of the sub-segments of the possible given rank in the respective sequences of the initial watermarked variants 190iv, delivering a set of maximum sizes.

In a **step S410bb,** the first electronic device 110d determines a maximum segment size as a sum of the maximum sizes of the set of maximum sizes.

After the execution of the step S410c discussed above, in a step S410bc the first electronic device 110d pads with dummy data the delivered additional watermarked variant 190av for having a size of the delivered additional watermarked variant 190av to be equal to the maximum segment size.

Thus, the segments according to the different additional watermarked variants 190av have the same length in term of size (e.g. in term of number of bytes).

Back to Figure 4b, the first electronic device 110d executes the step S410d discussed above. However, as was the case for the embodiments discussed above in relation with Figure 4 and Figure 4a, the step S410d is optional. Consequently, in some embodiments, the step S410d is not executed, e.g. when no header field is used for reflecting the technical features of the sub-segments.

Referring now to **Figure 5**, we describe a method for watermarking a media content 100 according to one embodiment of the present disclosure.

More particularly, for at least one segment of the media content 100, in a **step S500** the second electronic device 120d receives a request, initiated by a media player 130, for a segment (e.g. a segment listed in manifest(s) (e.g. an HLS manifest or a DASH manifest)).

In a **step S510**, the second electronic device 120d selects, based on an identifier associated to the media player 130, a watermarked variant 190iv, 190av of the segment among a set of watermarked variants 190iv, 190av of the segment. Such identifier associated to the media player 130 is e.g. directly an identifier uniquely identifying the media player 130 or an identifier of a user account used to access the content from the media player 130.

The set of watermarked variants 190iv, 190av of the segment comprises:
- at least one initial watermarked variant 190iv of the segment, the initial watermarked variant 190iv comprising a sequence of sub-segments carrying a watermark pattern associated to the initial watermarked variant 190iv; and
- at least one additional watermarked 190av variant comprising a sequence of sub-segments carrying different watermark patterns associated with at least two initial watermarked variants 190iv. Such additional watermarked 190av variant is e.g. generated by the first electronic device 110d by execution of the method for generating at least one additional watermarked variant of a segment of a media content 100 in any of the various embodiments disclosed above in relationship with Figure 4, Figure 4a and Figure 4b.

Back to Figure 5, when the identifier is expressed as a sequence of data symbols, the watermark patterns carried by the sub-segments of the selected watermarked variant 190iv, 190av form a sequence of watermark patterns representative of successive data symbols of the sequence of data symbols. For instance, in a **step S510a**, the second electronic device 120d obtains a time position of the segment in the media content 100. In a **step S510b**, the second electronic device 120d determines the successive data symbols of the sequence to be used for watermarking the content at that time position. However, in other embodiments, the steps S510a and S510b are not executed, e.g. when the watermark patterns carried by the sub-segments of the selected watermarked variant 190iv, 190av form a sequence of watermark patterns representative of the entire sequence of data symbols.

Depending on the embodiment, e.g. depending if the watermarked pattern in some sub-segments is fixed (see e.g. step S410b above), it may be that some of the initial watermarked variant 190iv of the segment and/or some of the possible additional watermarked 190av variants are not used for watermarking the content. It may be that only one additional watermarked 190av variant and only one initial watermarked variant 190iv of the segment has to be considered. However, generally speaking, at least one additional watermarked 190av variant and at least one initial watermarked variant 190iv of the segment is considered. However, it may be that none of the initial watermarked variants 190iv of the segment are considered.

Back to Figure 5, in a **step S520**, the second electronic device 120d sends the selected watermarked variant of the segment to the media player 130.

## Claims

1. Method for generating at least one additional watermarked variant (190av) of a segment of a media content (100) from at least two initial watermarked variants (190iv) of the segment, each initial watermarked variant comprising a sequence of sub-segments carrying a watermark pattern associated with the initial watermarked variant, **characterized in that** it comprises:
- **obtaining** (S400) the at least two initial watermarked variants; and
- **generating** (S410) at least one additional watermarked variant, said generating comprising, for at least one sub-segment of given rank in the sequence of an initial watermarked variant: **replacing** (S410c) the sub-segment of given rank in the sequence by a replacing sub-segment having the same given rank in a sequence of another initial watermarked variant, the replacing delivering the additional watermarked variant comprising a sequence of sub-segments carrying different watermark patterns associated with at least two initial watermarked variants.

2. Method according to claim 1, wherein said **replacing** is executed for a plurality of sub-segments of respective given rank in the sequence of the initial watermarked variant, wherein each of the sub-segments of respective given rank is replaced by a replacing sub-segment having the respective given rank in a sequence of another initial watermarked variant among the at least two initial watermarked variants.

3. Method according to any of the claims 1 to 2, wherein the **generating** further comprises: **updating** (S410d) at least one header field of the segment, the updated header field reflecting technical features of the replacing sub-segment.

4. Method according to any of the claims 1 to 3, wherein the **generating** further comprises: **parsing** (S410a) the initial watermarked variant to identify sub-segment boundaries.

5. Method according to any of the claims 1 to 4, wherein said **generating** further comprises:
- **determining** (S410aa) a maximum size of the sub-segments of given rank in the sequences of the at least two initial watermarked variants; and, before executing said **replacing:**
- **padding** (S410ab) with dummy data the replacing sub-segment if a size of said replacing sub-segment is lower than the maximum size.

6. Method according to any of the claims 1 to 5, wherein said **generating** further comprises:
- **determining** (S410aa), for another rank than the given rank, another maximum size of the sub-segments having the other rank in the sequences of the at least two initial watermarked variants; and
- **padding** (S410ab) with dummy data a sub-segment having the other rank in the sequence of the sub-segment to be replaced if a size of said sub-segment having the other rank in the sequence is lower than the other maximum size.

7. Method according to any of the claims 1 to 4, wherein said **generating** further comprises:
- **determining** (S410ba), for each possible given rank, a maximum size of the sub-segments of the possible given rank in the sequences of the initial watermarked variants, delivering a set of maximum sizes;
- **determining** (S410bb) a maximum segment size as a sum of the maximum sizes of the set; and, after executing said **replacing:**
- **padding** (S410bc) with dummy data the delivered additional watermarked variant for having a size of the delivered additional watermarked variant to be equal to the maximum segment size.

8. Method according to any of the claims 1 to 7, wherein said **generating** further comprises: **comparing** (S410b) the watermark pattern of the sub-segment of given rank to be replaced and a predetermined watermark pattern,
and wherein said **replacing** is executed only if the watermark pattern of the sub-segment of given rank to be replaced is not equal to the predetermined watermark pattern.

9. Method according to claim 8, wherein said **comparing** is executed only if the given rank corresponds to a predetermined rank.

10. Method for watermarking a media content (100), the method comprising, for at least one segment of the media content:
- **receiving** (S500) a request, initiated by a media player, for the segment;
- **selecting** (S510), based on an identifier associated to the media player, a watermarked variant of the segment among a set of watermarked variants of the segment; and
- **sending** (S520) the watermarked variant of the segment to the media player, **characterized in that** the set comprises:
- at least one initial watermarked variant (190iv) of the segment, the initial watermarked variant comprising a sequence of sub-segments carrying a watermark pattern associated to the initial watermarked variant; and
- at least one additional watermarked variant (190av) comprising a sequence of sub-segments carrying different watermark patterns associated with at least two initial watermarked variants,
and **in that**, when the identifier is expressed as a sequence of data symbols, the watermark patterns carried by the sub-segments of the selected watermarked variant form a sequence of watermark patterns representative of successive data symbols of the sequence.

11. Method according to claim 10, wherein said **selecting** (S510) comprises:
- **obtaining** (S510a) a time position of the segment in the media content; and
- **determining** (S510b) the successive data symbols of the sequence to be used for watermarking the media content at that time position.

12. Method according to any of the claims 1 to 11, wherein a format of the segment belongs to the group comprising:
- ISO base media file format;
- MPEG2 transport stream; and
- Audio data transport stream.

13. Computer program product **characterized in that** it comprises program code instructions for implementing a method according to at least one of the claims 1 to 12, when said program is executed on a computer or a processor.

14. Electronic device (110d) comprising at least one processor or at least one field-programmable gate array or at least one dedicated computing machine configured for carrying out the steps of the method of any of the claims 1 to 9 or of the method of claim 12 in that it depends on any of the claims 1 to 9.

15. Electronic device (120d) comprising at least one processor or at least one field-programmable gate array or at least one dedicated computing machine configured for carrying out the steps of the method of claim 10 or 11 or of the method of claim 12 in that it depends on the claim 10 or 11.
